# EUROPEAN PATENT SPECIFICATION

(11) **EP 2 656 976 B1**
(45) Date of publication and mention of the grant of the patent: **26.05.2021**
(21) Application number: 11850108.9
(22) Date of filing: 06.12.2011
(51) Int. Cl.: B25F 5/00

(54) **ELECTRIC POWER TOOL**
ELEKTROWERKZEUG
OUTIL ÉLECTRIQUE

(30) Priority: 21.12.2010 JP 2010284554
(43) Date of publication of application: 30.10.2013
(73) Proprietor: Makita Corporation, Anjo-shi, Aichi 446-8502 (JP)
(72) Inventor: WATANABE Masahiro, Anjo-shi Aichi 446-8502 (JP)
(74) Representative: Kramer Barske Schmidtchen Patentanwälte PartG mbB
(86) International application number: PCT/JP2011/078131
(87) International publication number: WO 2012/086399

(56) References cited:
- EP-A1- 0 086 114
- EP-A2- 1 510 299
- EP-A2- 1 894 678
- GB-A- 2 219 104
- JP-A- 1 260 996
- JP-A- 2 015 906
- JP-A- 2006 042 607
- JP-A- 2009 297 854
- JP-A- 2010 155 295
- JP-A- 2010 228 041
- JP-A- 2010 228 041
- US-A- 4 410 846
- US-A- 4 636 961
- US-A- 5 014 793
- US-A- 5 014 793
- US-A- 5 731 673
- US-A- 5 903 462
- US-A1- 2001 025 421
- US-A1- 2007 044 983
- US-A1- 2009 096 401

## Description

### TECHNICAL FIELD

The present invention mainly relates to a hand-held electric tool such as a screw fastening tool.

### BACKGROUND ART

For example, a screw fastening tool (screwdriver) as mentioned above is equipped with a handle portion protruding sidewise from a tool main body portion, and a trigger-type switch lever provided near a base portion (upper portion) of the handle portion so as to be pulled by the user with a fingertip. When this switch lever is pulled, an electric motor mounted within the tool main body portion starts to rotate a screw fastening bit attached to a spindle in the screw fastening direction or the screw loosening direction, whereby a screw is fastened or loosened. In the case of this screw fastening tool, there has been proposed a construction in which the motor is rotated at low speed at the early stage of the screw fastening to cause the screw to be securely engaged with a workpiece for screw fastening; thereafter, the motor is rotated at high speed so that the screw fastening can be completed quickly, thus allowing a speed change according to the amount by which the switch lever is pulled.

US 4,410,846 A discloses an electric tool comprising a switch for adjusting the rotational speed of an electric motor.

Another example is known from US2009096401A1.

Japanese Laid-Open Patent Publication No. 2-262953, which relates to an electric grinder, discloses a technique in which, on the assumption that the rotational speed of an electric motor mounted within the tool main body may fluctuate during the actual operation depending on how the operator applies his force to the tool, etc., the fluctuating output rotational speed is displayed on an LED, and the voltage applied to the electric motor is controlled, whereby the output rotational speed of the electric motor is maintained at a previously set output rotational speed.

### SUMMARY

### PROBLEMS TO BE SOLVED

However, unlike the grinder mentioned above, a rotary tool such as a screw fastening tool is endowed with a function by which the speed of an electric motor is arbitrarily changed according to the amount by which the user pulls a switch lever.

In such a lever operation, it is possible to adjust the rotational speed of the motor according to the amount by which the switch lever is pulled; however, it is impossible to comprehend the amount by which the switch lever has been operated. Therefore, when the user intuitively comprehends that the rotating amount is rather insufficient, it can happen that he puts an unnecessarily large force into his fingertip in an attempt to further pull the switch lever despite the fact that the switch lever has been pulled as far as it can go.

In particular, in the case where the pressing force due to the pulling of the switch lever is detected not by a slide resistance type speed change switch but by a force sensor (load sensor), and where the starting of the electric motor is stopped or a speed change is effected based on an output signal from the sensor, it is possible to minimize the amount by which the switch lever is pulled. In this way, it is possible to mitigate the fatigue of the fingertip of the user in the case of repeated operation. On the other hand, since the amount by which the switch lever is pulled is minimized, it is still difficult to comprehend the amount by which the lever has been pulled.

It is an object to provide an electric tool such as a screw fastening tool in which a speed change is effected according to the operation amount of the switch, with the speed change being effected via a switch lever or the like, wherein the user is enabled to comprehend the magnitude by which the switch is being operated.

### MEANS FOR SOLVING THE PROBLEMS

The above object is achieved by an electric tool according to claim 1.

According to a first aspect, there is provided an electric tool having an electric motor mounted within a tool main body as a drive source and equipped with a switch for adjusting the rotational speed of the electric motor, wherein the rotational speed of the electric motor is adjusted according to the operation amount of the switch. The electric tool includes an operation amount detection means for detecting the operation amount of the switch, and an operation amount indicating means for indicating the operation amount of the switch detected by the operation amount detection means.

With the first aspect, the operation amount of the switch is indicated by the operation amount indicating means, and therefore, user can intuitively comprehend the output rotational speed of the electric motor. The first aspect is greatly advantageous in that it is possible to intuitively comprehend the rotational speed of the electric motor for a minute operation amount of the switch. This can be accomplished in a construction in which the pressing force produced through the operation of the switch is detected, for example, by a force sensor (load sensor), and the speed of the electric motor is changed based on an output signal from the force sensor.

In addition to tools such as a screw fastener or a drilling tool, which have rotating output shafts, embodiments according to the first aspect is also applicable to a reciprocating tool, etc., including a reciprocating saw and a jig saw.

Further, the first aspect is applicable to a construction in which an electric motor is changed in speed according to the operation amount of a switch lever used for starting and stopping. In addition, it is also possible to provide a switch for adjusting (changing) the rotational speed of an electric motor separately from the switch for starting and stopping the electric motor. Thus, it is applicable to various types of switches that are pulled, pushed or slid for operation, as a speed change switch.

According to a second aspect, in the first aspect, there is provided an output shaft rotated by the electric motor as a drive source. Starting and stopping of the electric motor is effected through a pulling operation of a switch lever by the user. The rotational speed of the electric motor can be adjusted according to the amount by which the switch lever is pulled. The amount by which the switch lever is pulled is detected by the operation amount detection means and is indicated by the operation amount indicating means.

With the second aspect, the amount by which the switch lever is pulled is reported by the operation amount indicating means, whereby the user is enabled to intuitively comprehend the rotational speed level (which is low-speed range, medium-speed range, or high-speed range) of the output shaft. The second aspect is greatly advantageous in that it is possible to intuitively comprehend the level of the output rotational speed of the electric motor for a minute operation amount of the switch lever. This can be accomplished using a construction in which the pressing force produced through the pulling operation of the switch lever is detected, for example, by a force sensor (load sensor), and the electric motor is started, stopped or changed in speed based on an output signal from the force sensor. By applying the first aspect also to the construction in which a slide resistance type speed change switch is used as the operation amount detecting means instead of the force sensor, the user can intuitively comprehend the output rotational speed of the electric motor through the reported operation amount of the switch lever.

According to a third aspect, a force sensor is used as the operation amount detection means.

With the third aspect, a pressing force produced, for example, by the pulling operation of the switch lever by the user (the operation of a speed change switch) is detected by the force sensor, and the electric motor is started based on the output signal from this force sensor. Further, the output signal from the force sensor is changed according to a change in the pressing force. The change in pressing force is caused by a change in the amount by which the switch lever is pulled (the operation amount of the speed change switch). This results in a change in the speed of the electric motor. By using the force sensor as the operation amount detection means, it is possible to reduce the amount by which the switch lever is pulled as compared with the conventional construction in which a slide resistance type speed change switch is used. In this way, it is possible to mitigate fatigue in the fingertip of the user caused by repeated pulling of the switch lever.

According to a fourth aspect, in any one of the first through third aspects, light-emitting diodes are used as the operation amount indicating means.

With the fourth aspect, three of, for example, five light-emitting diodes may be lit to enable the user to intuitively comprehend, for example, that the pulling amount of the switch lever corresponds, for example, to the medium speed range of the rotational speed level of the output shaft. In addition, it is possible to enable to intuitively comprehend that illumination of one light-emitting diode indicates the pulling amount corresponds to the low-speed range, and illumination of the five light-emitting diodes indicates the pulling amount corresponding to the high-speed range.

According to a fifth aspect, in any one of the first through fourth aspects, the operation amount indicating means is provided on a back surface of the tool main body, which is easily visible by the user during use.

With the fifth aspect, the user can intuitively and easily comprehend, for example, the amount by which the switch lever is pulled (the operation amount of the speed change switch).

According to a sixth aspect, in any one of the first through fifth aspects, the operation amount indicating means can report to correspond to both normal and reverse rotations of the electric motor.

With the sixth aspect, in a screw fastening machine as the electric tool, it is possible, for example, to intuitively comprehend the switch lever pulling amount (the operation amount of the speed change switch) for both during screw fastening and screw loosening.

According to a seventh aspect, in any one of first through sixth aspects, the operation amount indicating means is capable of indicating in two or more kinds of ways, and a changeover switch is provided for switching the way of indicating.

With the seventh aspect, it is possible to select indicating method according to the type of work or according to the user's preference. In this way, it is possible to further improve the operability of the rotary tool. Examples of indicating means may include a way in which there are provided a plurality of light-emitting diodes which are lit in a number corresponding, for example: (1) to the switch lever pulling amount (the operation amount of the speed change switch), (2) a way in which the absolute value of the rotational speed of the electric motor or the spindle is displayed in value on a liquid crystal panel, (3) a way in which the rotational speed of the electric motor or the spindle is displayed in a meter, and (4) a way in which a indicating sound is produced that changes in frequency or the number of times according to the rotational speed of the electric motor or the spindle.

### BRIEF DESCRIPTION OF THE DRAWINGS

[Fig. 1] Fig. 1 is an overall perspective view of a rotary tool according to an embodiment of the present teachings.
[Fig. 2] Fig. 2 is a vertical sectional view of an operation switch. This figure illustrates an OFF state in which a switch lever has not been pulled.
[Fig. 3] Fig. 3 is a vertical sectional view of the operation switch. This figure illustrates an ON state in which a switch lever has been pulled.
[Fig. 4] Fig. 4 is a block diagram of a control circuit.
[Fig. 5] Fig. 5 is a rear view of the rotary tool as seen from the direction indicated by arrow (V) in Fig. 1.

### BEST MODE FOR CARRYING OUT THE TEACHINGS

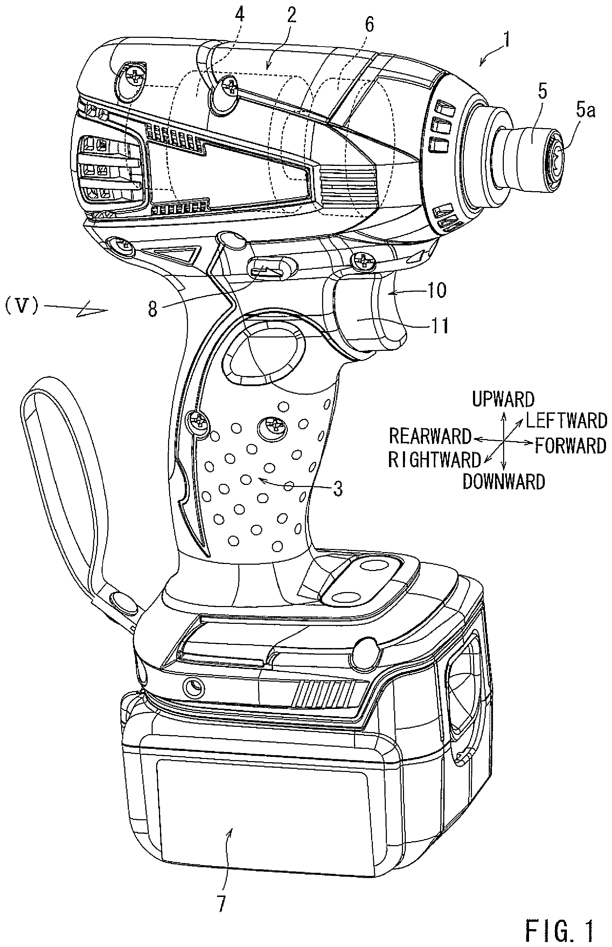

Next, an embodiment will be described with reference to Figs. 1 through 5. Fig. 1 shows a rotary tool 1 according to the present embodiment. In the present embodiment, a rotary impact type screw fastening tool called an impact driver is exemplified as the rotary tool 1. This rotary tool 1 is equipped with a tool main body 2 and a handle portion 3. An electric motor 4, used as the drive source, and an impact mechanism 6 are mounted within the tool main body 2. A spindle 5 protrudes from the front portion of the tool main body 2. At the leading end of the spindle 5, there is provided a bit holder 5a for attaching a drill bit (not shown). When the electric motor 4 is started, rotational power may be output in the screw fastening direction or in the screw loosening direction via the spindle 5. When an external torque of a level not lower than a fixed level is applied to the spindle 5, an impact (impact) in the rotational direction is imparted to the spindle 5 by the impact mechanism 6, making it possible to firmly fasten a screw or to loosen the same. The basic construction of this impact driver 2 is the same as that of the prior art, and it requires no particular modification in the present embodiment.

The handle portion 3 is provided so as to protrude downwardly from the lower surface of the tool main body 2. A rechargeable battery pack 7 is attached to the lower portion of the handle portion 3. This battery pack 7 can be detached and recharged by a separately prepared charger for repeated use. Using the battery pack 7 as the power source, the electric motor 4 is started, and the electric power is supplied to other electrical components such as an operation amount information supply means 30 that will be described later.

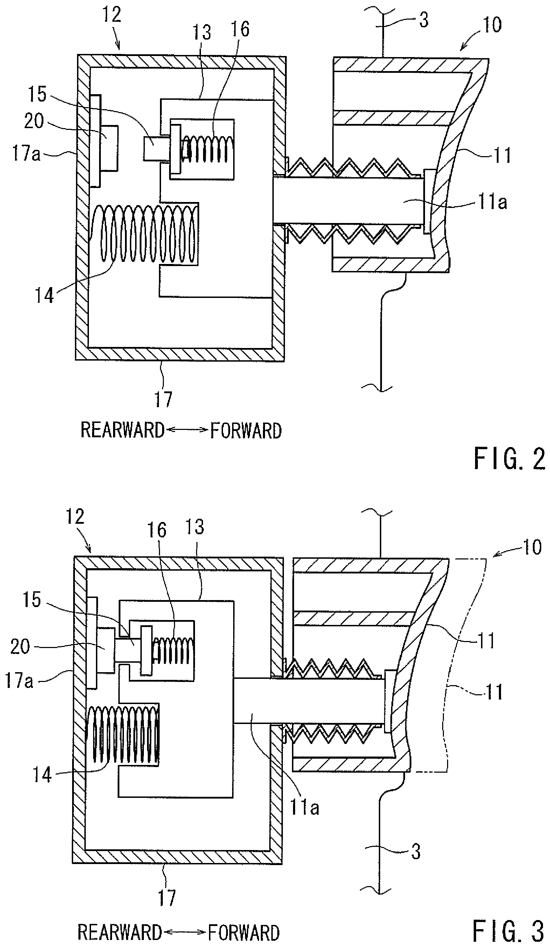

An operation switch 10 configured to be pulled by the user with a fingertip is provided on the lower surface side of the tool main body 2. More specifically, it is located on the front surface near the base portion (upper portion) of the handle portion 3. When the user pulls the operation switch 10 with a fingertip of his hand grasping the hand portion 3, the electric motor 4 is started; when the pulling operation is released, the electric motor 4 is stopped. As the pulling amount of the operation switch 10 increases, the speed of the electric motor 4 is increased, and as the pulling amount decreases, the speed of the electric motor 4 is reduced. The rotary tool 1 according to the present embodiment is characterized in that a relatively weak pulling can generate a sufficient operable amount with respect to the operation switch 10, and that it is possible for the user to visually and intuitively comprehend the pulling amount. Figs. 2 and 3 illustrate the operation switch 10 in detail.

The operation switch 10 is equipped with a trigger type switch lever 11, and a switch main body 12 to be operated through the pulling operation of the switch lever 11. The switch main body 12 is mounted within the upper portion of the handle portion 3. The switch lever 11 is supported by a case 17 of the switch main body 12 via a support rod portion 11a so as to be capable of a translation movement. The support rod portion 11a of the switch lever 11 is inserted into the case 17. Inside the case 17, an operation block 13 is attached to the leading end of the support rod portion 11a. The operation block 13 moves in unison with the switch lever 11 via the support rod portion 11a. This operation block 13 is urged in such a direction that the switch lever 11 returns toward the OFF side (front side), by a first compression spring 14 provided between itself and a rear wall 17a of the case 17. In this way, the switch lever 11 is operated to be pulled against the urging force of the first compression spring 14.

An operation pin 15 is supported by the operation block 13 so as to be movable in the forward and rearward direction. The operation pin 15 protrudes from the rear surface of the operation block 13. The operation pin 15 is urged by a second compression spring 16 in such a direction such that the operation pin 15 will protrude from the rear surface of the operation block 13. A force sensor 20 is mounted to the rear wall 17a of the case 17 at a position rearward of the operation pin 15. This force sensor 20 is a load sensor configured to transform a change in the pressing force of the operation pin 15 to a change in a resistance ratio of a bridge circuit before outputting it; in the present embodiment, a conventionally known force sensor is used. Based on a voltage signal output from this force sensor 20, the supply voltage to the electric motor 4 is changed, whereby the electric motor 4 is started, stopped, and changed in speed.

Thus, when the user pulls the switch lever 11 with a finger tip of his hand grasping the handle portion 3, the operation block 13 retreats in unison with the switch lever, and the operation pin 15 protruding from the rear surface is caused to abut the force sensor 20. When the operation pin 15 is caused to abut the force sensor 20, a pressing force is generated against the force sensor 20. The operation pin 15 generates the pressing force when it is brought to abut the force sensor 20 through a relatively weak pulling of the switch lever 11. When the pressing force is generated against the force sensor 20, the resultant change in the resistance ratio of the bridge circuit is output as an electric signal, whereby the electric motor 4 is started.

As the operation block 13 retreats by further pulling the switch lever 11, the operation pin 15 advances with respect to the operation block 13 against the force of the second compression spring 16, with the result that the urging force of the second compression spring 16 acting on the operation pin 15 gradually increases. In this way, the pressing force of the operation pin 15 against the force sensor 20 is gradually increased.

As the pressing force of the operation pin 15 against the force sensor 20 is gradually increased, the electric signal of the force sensor 20 undergoes a change, and the speed of the electric motor 3 is increased. Conversely, as the pulling operation on the switch lever 11 is restored by the urging force of the first compression spring 14, the operation block 13 is restored forward in unison with the switch lever, so that the pressing force of the operation pin 15 against the force sensor 20 is reduced, resulting in a reduction in the speed of the electric motor 3.

In this way, through a change in the amount by which the switch lever 11 is pulled, the pressing force against the force sensor 20 undergoes a change, whereby the electric motor 3 undergoes a change in speed based on a change in the resultant output voltage signal, and, at the same time, based on the change in the voltage signal, the change in the pulling operation amount of the switch lever 11 is visually reported to the user by the operation amount information supply means 30. As a result, the force sensor 20 functions as the operation amount detection means for detecting the pulling operation amount of the switch lever 11.

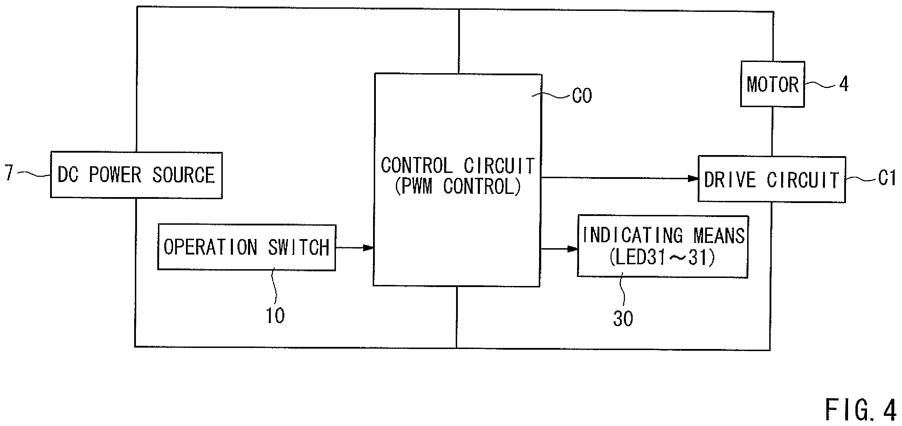

As shown in Fig. 4, the voltage signal of the force sensor 20, which is changed through the operation of pulling the operation switch 10, is input to a control circuit C0. At the control circuit C0, a PWM control is performed based on the voltage signal of the force sensor 20, and the result thereof is output to a drive circuit C1 of the electric motor 4 and to the operation amount information supply means 30. The electric power determined through the PWM control at the control circuit C0 is supplied from a DC power source (the battery pack 7) to the electric motor 4 via the drive circuit C1, so that the electric motor 4 is rotated at a predetermined rotational speed.

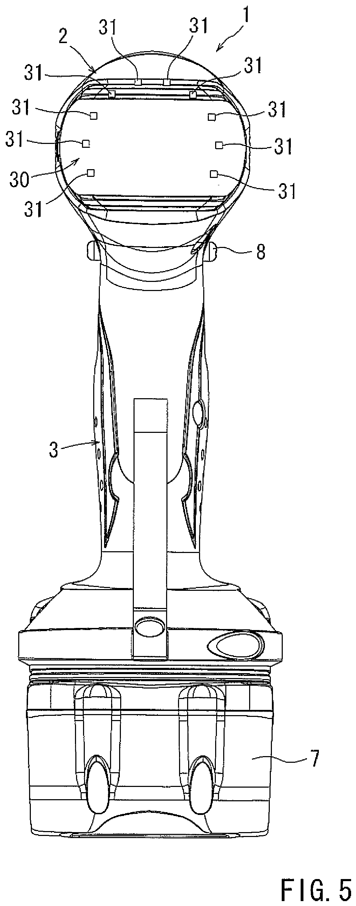

In the present embodiment, a plurality of light-emitting diodes (LEDs 31) are used as the operation amount information supply means 30. As shown in Fig. 5, a total of 10 LEDs 31 are arranged at positions which are on the rear surface of the tool main body 2 and which can be easily visually observed by the user. As shown in the drawing, the ten LEDs 31 are left and right symmetrically arranged along a same circular circumference to correspond to the shape of the rear surface of the tool main body 2. The voltage signal of the force sensor 20, which is changed according to the pulling operation amount of the operation switch 10, is interpreted by the control circuit C0, and an appropriate number of LEDs 31 are lit based on the interpreted result. By visually checking the number of LEDs 31 that are lit, it is possible for the user to intuitively comprehend the pulling operation amount of the switch lever 11 and, eventually, the level (low-speed, medium-speed, high-speed) of the output rotational speed of the electric motor 4.

In the case of the present embodiment, the ten LEDs 31 are arranged with five on each of the right and left half circular circumferences. For example, in the low-speed range, where the pulling operation amount of the switch lever 11 is small, the uppermost two right and left LEDs 31 are lit; and as the pulling operation amount is gradually increased to attain higher speed, the lower two right and left LEDs are lit, and then, the still lower two and left LEDs are lit, making it possible for the user to visually and intuitively comprehend that the electric motor 3 is being rotated in the medium-speed range.

When the operation switch 10 is pulled to the stroke end, where the maximum pressing force acts on the force sensor 20, this is interpreted by the control circuit C0 to cause all the ten LEDs 31 to be lit. This is visually checked by the user, thus making it possible for the user to visually and intuitively comprehend that the pulling operation amount of the switch lever 11 is at its maximum, and the electric motor 3 is being rotated at the maximum speed. In the state in which the switch lever 11 is pulled to the stroke end to cause the electric motor 3 to be rotated at the maximum speed, the spindle 5 rotates at the maximum speed, and, at the same time, it is possible to obtain a large striking force by the impact mechanism 6, whereby it is possible to quickly perform screw fastening or screw loosening.

On the lower surface side of the tool main body 2 and at the base portion (upper portion) of the handle portion 3, there is provided a normal/reverse switching rod 8 for switching the rotational direction of the electric motor 3. This normal/reverse switching rod 8 consists of a single bar, which is arranged so as to extend in the left and right directions through a portion near the base portion of the handle portion 3. By pushing this normal/reverse switching rod 8 to the left or to the right, it is possible to effect normal/reverse switching of the rotational direction of the electric motor 3, whereby it is possible to perform screw fastening or screw loosening.

With the rotary tool 1 according to the present embodiment constructed as described above, the electric motor 3 is started by pressing the operation pin 15 against the force sensor 20 through the pulling operation of the switch lever 11 of the operation switch 10, and, further, the pulling operation amount of the switch lever 11 is changed, so that the pressing force against the force sensor 20 is changed to effect a speed change in the electric motor 3. Therefore, as compared to the case of the conventional slide resistance type speed change switch, it is possible to substantially reduce the pulling operation amount of the switch lever 11, whereby it is possible to mitigate the fatigue of the fingertip of the user as a result of repeated pulling operation.

Further, while effecting a speed change in the electric motor 3 through the detection of the pulling operation amount of the switch lever 11 by the force sensor 20 as the operation amount detection means, it is possible for the user to visually and intuitively comprehend the pulling operation amount (the output rotational speed level of the electric motor 3 or of the spindle 5) based on the number of LEDs 31 that are lit to serve as the indicating means 30, so that it is possible to improve the operability of the rotary tool 1.

The above-described embodiment allows various modifications. For example, while in the above-described example a total of ten LEDs 31 are employed as the indicating means 30, it is also possible to provide a total of three LEDs 31 in correspondence with the low-speed range, medium-speed range, and high-speed range. It is also possible to arrange more than ten LEDs to provide a finer display of the pulling operation amount. In short, the electric motor 3 is started, stopped, and changed in speed based on a change in the pressing force against the force sensor by the pulling operation on the switch lever 11, and, at the same time, the pulling operation amount of the switch lever 11 is made known to the user by the operation amount indicating means, whereby it is possible to improve the operability and usability of the rotary tool 1.

Other than the above-described construction in which a plurality of LEDs 31 are lit, the operation amount indicating means may have a construction in which a liquid crystal panel is provided on the rear surface of the tool main body 2 to display the values of the pulling operation amount of the switch lever 11 in percentage, or a construction which produces an indicating sound that changes in scale or in the number of times of production according to the pulling operation amount of the switch lever 11. It is also possible that a changeover switch can switch for display between these plural ways of indicating. Further, as the operation amount indicating means, it is also possible to arrange a meter equipped with an indicator on the rear surface of the tool main body 2.

While in the above-described example the force sensor 20 is exemplified as the operation amount detection means, the same effect can be achieved by applying the above operation amount indicating means to the construction which uses a slide resistance type speed change switch as the operation amount detection means.

Further, the pulling operation amount of the switch lever 11 (the operation amount of the switch) may include applying a voltage command value of the electric motor 3 (the duty of the PWM control, etc.) which corresponds to the pulling operation amount.

Further, while in the above-described electric tool the speed change of the electric motor 3 is effected through the pulling operation on the switch lever 11, the above-described operation amount detection means and the operation amount indicating means are also applicable to the operation amount of an electric tool in which the speed change is effected through the operation of depressing a pushbutton or the operation of sliding a slider.

Further, while in the above-described example a screw fastening tool (rotary tool) has been exemplified as the electric tool, similar operation amount detection means and similar operation amount indicating means are also applicable to a reciprocating tool such as a reciprocating saw or a jig saw.

## Claims

1. An electric tool (1) having an electric motor (4) mounted within a tool main body (2) as a drive source and equipped with a switch for adjusting the rotational speed of the electric motor (4), wherein
the switch (10) is equipped with a trigger type switch lever,
the rotational speed of the electric motor (4) is adjusted according to the operation amount of the switch (10),
the electric tool (1) includes an operation amount detection means (20) for detecting the operation amount of the switch (10), and
the starting and stopping of the electric motor is effected through a pulling operation of the switch lever (11) by a user, wherein the rotational speed of the electric motor (4) can be adjusted according to the amount by which the switch lever (11) is pulled,
**characterized in that** the electric tool further comprises an operation amount indicating means (30) for indicating the operation amount of the switch (10) detected by the operation amount detection means (20), wherein the amount by which the switch lever (11) is pulled is detected by the operation amount detection means (20) and is indicated by the operation amount indicating means (30).

2. The electric tool (1) according to claim 1, further comprising an output shaft (5) configured to be rotated by the electric motor (4) as a drive source.

3. The electric tool (1) according to claim 1 or 2, wherein a force sensor (20) is used as the operation amount detection means.

4. The electric tool (1) according to any one of claims 1 through 3, wherein light-emitting diodes (31) are used as the operation amount indicating means (30).

5. The electric tool (1) according to any one of claims 1 through 4, wherein the operation amount indicating means (30) is provided on a rear surface of the tool main body (2).

6. The electric tool (1) according to any one of claims 1 through 5, wherein the operation amount indicating means (30) can indicate both normal and reverse rotations of the electric motor (4).

7. The electric tool (1) according to any one of claims 1 through 6, wherein the operation amount indicating means (30) is capable of indicating in two or more kinds of ways, and wherein a changeover switch is provided for switching the way of indicating.

8. The electric tool (1) according to any one of the preceding claims, wherein
the operation amount detection means is a force sensor (20),
the switch (10) comprises a switch main body (12), a switch lever (11) and an operation pin (15),
the switch lever (11) is movably supported by a case (17) of the switch body (12) via a support rod portion (11a) inserted into the case (17),
an operation block (13) is disposed within the case (17) and attached to a leading end portion of the support rod portion (11a),
the operation pin (15) is supported by the operation block (13) so as to be movable in a forward-rearward-direction and protrudes from a rear surface of the operation block (13) and is urged rearwards by a compression spring (16),
the force sensor is mounted to a rear wall (17a) of the case (17) at a position rearward the operation pin (15), and
when the switch lever (11) is pulled, the operation pin (15) moves toward the force sensor (20), so that the force sensor (20) outputs the voltage signal.

9. The electric tool (1) according to any one of the preceding claims, wherein
the tool main body includes a front end portion and a rear surface in a longitudinal direction thereof,
a spindle (5) protrudes forward from the front end portion, and
the operation amount indication means (30) is disposed at the rear surface.

10. The electric tool (1) according to any one of the preceding claims, wherein
the electric tool (1) further comprises a control circuit (CO),
the operation amount detection means is configured to output a voltage signal to the control circuit (CO) based on a change in the operation amount, so that the operation amount indicating means (30) indicates the operation amount based on the change in the voltage signal, and
the control circuit (CO) is configured to perform a PWM control based on the voltage signal, and the PWM controlled voltage signal is output to the electric motor (4) and to the operation amount indicating means (30).

## Patentansprüche

1. Elektrisches Werkzeug (1), das einen elektrischen Motor aufweist, der innerhalb eines Werkzeughauptkörpers (2) als eine Antriebsquelle montiert ist, und mit einem Schalter zum Einstellen der Drehzahl des elektrischen Motors ausgestattet ist, bei dem
der Schalter (10) mit einem drückerähnlichen Schalthebel ausgestattet ist,
die Drehzahl des elektrischen Motors (4) gemäß dem Betätigungsausmaß des Schalters (10) eingestellt wird,
das elektrische Werkzeug (1) ein Betätigungsausmaßerfassungsmittel (20) zum Erfassen des Betätigungsausmaßes des Schalters (10) aufweist, und
das Starten und Stoppen des elektrischen Motors durch eine Drückbetätigung des Schalthebels (11) durch einen Benutzer bewirkt wird, bei dem die Drehzahl des elektrischen Motors (4) gemäß dem Ausmaß eingestellt werden kann, durch welches der Schalthebel (11) gedrückt wird,
**dadurch gekennzeichnet, dass** das elektrische Werkzeug ferner ein Betätigungsausmaßanzeigemittel (30) zum Anzeigen des Betätigungsausmaßes des Schalters (10), das durch das Betätigungsausmaßerfassungsmittel (20) erfasst wird, aufweist, bei dem das Ausmaß, durch welches der Schalthebel (11) gedrückt wird, durch das Betätigungsausmaßerfassungsmittel (20) erfasst wird und durch das Betätigungsausmaßanzeigemittel (30) angezeigt wird.

2. Elektrisches Werkzeug (1) nach Anspruch 1, ferner mit einer Ausgabewelle (5), die dazu konfiguriert ist, durch den elektrischen Motor (4) als eine Antriebsquelle gedreht zu werden.

3. Elektrisches Werkzeug (1) nach Anspruch 1 oder 2, bei dem ein Kraftsensor (20) als das Betätigungsausmaßerfassungsmittel verwendet wird.

4. Elektrisches Werkzeug (1) nach einem der Ansprüche 1 bis 3, bei dem lichtemittierende Dioden (31) als das Betätigungsausmaßanzeigemittel (30) verwendet werden.

5. Elektrisches Werkzeug (1) nach einem der Ansprüche 1 bis 4, bei dem das Betätigungsausmaßanzeigemittel (30) an einer hinteren Oberfläche des Werkzeughauptkörpers (2) vorgesehen ist.

6. Elektrisches Werkzeug (1) nach einem der Ansprüche 1 bis 5, bei dem das Betätigungsausmaßanzeigemittel (30) sowohl eine normale Drehung als auch eine Rückwärtsdrehung des elektrischen Motors (4) anzeigen kann.

7. Elektrisches Werkzeug (1) nach einem der Ansprüche 1 bis 6, bei dem das Betätigungsausmaßanzeigemittel (30) auf zwei oder mehr Arten anzeigen kann, und bei dem ein Umschalter zum Schalten der Art der Anzeige vorgesehen ist.

8. Elektrisches Werkzeug (1) nach einem der vorhergehenden Ansprüche, bei dem
das Betätigungsausmaßanzeigemittel ein Kraftsensor (20) ist,
der Schalter (10) einen Schalterhauptkörper (12), einen Schalthebel (11) und einen Betätigungsstift (15) aufweist,
der Schalthebel (11) durch ein Gehäuse (17) des Schalterkörpers (12) über einen Lagerungsstabbereich (11a), der in dem Gehäuse (17) eingeführt ist, bewegbar gelagert wird,
ein Betätigungsblock (13) innerhalb des Gehäuses (17) angeordnet ist und an einem Führungsendbereich des Lagerungsstabbereichs (11a) angebracht ist,
der Betätigungsstift (15) durch den Betätigungsblock (13) gelagert wird, so dass er in einer Vorwärts-Rückwärts-Richtung bewegbar ist und von einer hinteren Oberfläche des Betätigungsblocks (13) vorsteht und nach hinten durch eine Kompressionsfeder (16) vorgespannt wird,
der Kraftsensor an eine hintere Wand (17a) des Gehäuses (17) an einer Position rückseitig des Betätigungsstiftes (15) montiert ist, und
wenn der Schalthebel (11) gedrückt wird, der Betätigungsstift (15) sich in Richtung des Kraftsensors bewegt, so dass der Kraftsensor (20) das Spannungssignal ausgibt.

9. Elektrisches Werkzeug (1) nach einem der vorhergehenden Ansprüche, bei dem
der Werkzeughauptkörper einen vorderen Endbereich und eine hintere Oberfläche in einer Längsrichtung desselben aufweist,
eine Spindel (5) nach vorne von dem vorderen Endbereich vorsteht, und
das Betätigungsausmaßanzeigemittel (30) an der hinteren Oberfläche angeordnet ist.

10. Elektrisches Werkzeug (1) nach einem der vorhergehenden Ansprüche, bei dem
das elektrische Werkzeug (1) ferner eine Steuerungsschaltung (CO) aufweist,
das Betätigungsausmaßerfassungsmittel dazu konfiguriert ist, ein Spannungssignal der Steuerungsschaltung (CO) basierend auf einer Änderung bei dem Betätigungsausmaß auszugeben, so dass das Betätigungsausmaßanzeigemittel (30) das Betätigungsausmaß basierend auf der Änderung bei dem Spannungssignal anzeigt, und
die Steuerungsschaltung (CO) dazu konfiguriert ist, eine PWM-Steuerung basierend auf dem Spannungssignal durchzuführen, und das PWM-gesteuerte Spannungssignal dem elektrischen Motor (4) und dem Betätigungsausmaßanzeigemittel (30) ausgegeben wird.

## Revendications

1. Outil électrique (1) ayant un moteur électrique (4) monté à l'intérieur d'un corps principal d'outil (2) comme source d'entraînement et équipé d'un interrupteur pour régler la vitesse de rotation du moteur électrique (4), dans lequel
l'interrupteur (10) est équipé d'un levier de commutation de type déclencheur,
la vitesse de rotation du moteur électrique (4) est ajustée selon l'amplitude de manœuvre de l'interrupteur (10),
l'outil électrique (1) comprend un moyen de détection d'amplitude de manœuvre (20) pour détecter l'amplitude de manœuvre de l'interrupteur (10), et
le démarrage et l'arrêt du moteur électrique sont effectués par une manœuvre de traction du levier de commutation (11) par un utilisateur, dans lequel la vitesse de rotation du moteur électrique (4) peut être ajustée selon l'amplitude par laquelle le levier de commutation (11) est tracté,
**caractérisé en ce que** l'outil électrique comprend en outre un moyen indicateur d'amplitude de manœuvre (30) pour indiquer l'amplitude de manœuvre de l'interrupteur (10) détectée par le moyen de détection d'amplitude de manœuvre (20), dans lequel l'amplitude par laquelle le levier de commutation (11) est tracté est détectée par le moyen de détection d'amplitude de manœuvre (20) et est indiquée par le moyen indicateur d'amplitude de manœuvre (30).

2. Outil électrique (1) selon la revendication 1, comprenant en outre un arbre de sortie (5) configuré pour être mis en rotation par le moteur électrique (4) comme source d'entraînement.

3. Outil électrique (1) selon la revendication 1 ou 2, dans lequel un détecteur de force (20) est utilisé comme moyen de détection d'amplitude de manœuvre.

4. Outil électrique (1) selon l'une quelconque des revendications 1 à 3, dans lequel des diodes électroluminescentes (31) sont utilisées comme moyen indicateur d'amplitude de manœuvre (30).

5. Outil électrique (1) selon l'une quelconque des revendications 1 à 4, dans lequel le moyen indicateur d'amplitude de manœuvre (30) est fourni sur une surface arrière du corps principal d'outil (2).

6. Outil électrique (1) selon l'une quelconque des revendications 1 à 5, dans lequel le moyen indicateur d'amplitude de manœuvre (30) peut indiquer à la fois les rotations normales et inverses du moteur électrique (4).

7. Outil électrique (1) selon l'une quelconque des revendications 1 à 6, dans lequel le moyen indicateur d'amplitude de manœuvre (30) est capable d'indiquer de deux ou plusieurs types de façons, et dans lequel un commutateur est prévu pour changer la façon d'indiquer.

8. Outil électrique (1) selon l'une quelconque des revendications précédentes, dans lequel
le moyen de détection d'amplitude de manœuvre est un détecteur de force (20),
l'interrupteur (10) comprend un corps principal d'interrupteur (12), un levier de commutation (11) et une tige de manœuvre (15),
le levier de commutation (11) est supporté de manière mobile par un boîtier (17) du corps d'interrupteur (12) par l'intermédiaire d'une partie de barre de support (11a) insérée dans le boîtier (17),
un bloc de manœuvre (13) est disposé à l'intérieur du boîtier (17) et fixé à une partie d'extrémité avant de la partie de barre de support (11a),
la tige de manœuvre (15) est supportée par le bloc de manœuvre (13) de manière à pouvoir être déplacée dans une direction avant-arrière et dépasse d'une surface arrière du bloc de manœuvre (13) et est poussée vers l'arrière par un ressort de compression (16),
le détecteur de force est monté sur une paroi arrière (17a) du boîtier (17) à une position à l'arrière de la tige de manœuvre (15), et
lorsque le levier de commutation (11) est tiré, la tige de manœuvre (15) se déplace vers le détecteur de force (20), de sorte que le détecteur de force (20) émet le signal de tension.

9. Outil électrique (1) selon l'une quelconque des revendications précédentes, dans lequel
le corps principal d'outil comprend une partie d'extrémité avant et une surface arrière dans la direction longitudinale de celui-ci,
une broche (5) dépasse vers la partie d'extrémité avant, et
le moyen indicateur d'amplitude de manœuvre (30) est disposé sur la surface arrière.

10. Outil électrique (1) selon l'une quelconque des revendications précédentes, dans lequel
l'outil électrique (1) comprend en outre un circuit de commande (CO),
le moyen de détection d'amplitude de manœuvre est configuré pour émettre un signal de tension vers le circuit de commande (CO) sur la base d'une modification de l'amplitude de manœuvre, de sorte que le moyen indicateur d'amplitude de manœuvre (30) indique l'amplitude de manœuvre sur la base de la modification du signal de tension, et
le circuit de commande (CO) est configuré pour effectuer une commande PWM basée sur le signal de tension, et le signal de tension commandé par PWM est envoyé au moteur électrique (4) et au moyen indicateur d'amplitude de manœuvre (30).
